# EUROPEAN PATENT SPECIFICATION

(11) **EP 2 026 570 B1**
(45) Date of publication and mention of the grant of the patent: **29.06.2011**
(21) Application number: 08153730.0
(22) Date of filing: 31.03.2008
(51) Int. Cl.: H04N 5/445, G06F 3/048

(54) **Broadcast receiver and user input device having item matching function, and method thereof**
Rundfunkempfänger und Benutzereingabevorrichtung mit Elementübereinstimmungsfunktion und Verfahren dafür
Récepteur de diffusion et dispositif d'entrée d'utilisateur disposant d'une fonction de correspondance, et son procédé

(30) Priority: 02.08.2007 KR 20070078263
(43) Date of publication of application: 18.02.2009
(73) Proprietor: Samsung Electronics Co., Ltd., Gyeonggi-do 442-742 (KR)
(72) Inventor: Lim, Ji-taek, Seoul (KR)
(74) Representative: Waddington, Richard

(56) References cited:
- EP-A- 1 795 998
- WO-A-99/57890
- GB-A- 2 313 246
- US-A1- 2004 207 766
- US-B1- 6 266 098
- US-B1- 6 597 374

## Description

### BACKGROUND OF THE INVENTION

### 1. Field of the Invention

Apparatuses and methods consistent with the present invention relate to a broadcast receiver and a user input device having an item matching function, and an item matching method. More particularly, apparatuses and methods consistent with the present invention relate to a broadcast receiver having an item matching function which enables a user to watch a frequently viewed channel through an easy manipulation of a remote controller when the user wants to, by setting the user's frequently viewed channel as a favorite channel, a user input device and an item matching method.

### 2. Description of the Related Art

In general, to watch an intended channel, a user can directly input a channel number of a broadcast station as he/she remembers using number keys of a user input device such as remote controller, or select a channel number by sequentially pressing channel up (△) and down (∇) keys. However, when the number of the channels increases, the user cannot remember all the channel numbers. Also, it takes some time to sequentially increase and decrease the channel number using the channel up (△) and down (∇) keys, which causes inconvenience to the user.

To address those problems, recently, by mapping a plurality of number keys to alphabets, the user can select his/her intended channel number by sequentially pressing the number keys corresponding to the alphabets of the broadcast station. Alternatively, by providing shortcut keys in the remote controller and matching the user's favorite channel to a shortcut key, the user can select his/her favorite channel.

As for the first method, it is quite hard for the user to remember the names of all broadcast stations and the user needs to input the name of the broadcast station one by one. As for the second method, if there are multiple favorite channels, the remote controller needs to include the shortcut keys as many as the channels, which causes a problem in the key arrangement. In addition, since the user does not know the current setting state of the favorite channel, the user has to check the setting state of the favorite channel in a menu screen or using the short keys one by one.

In case where the remote controller includes a liquid crystal display (LCD) to facilitate the editing of the favorite channels and the user's function manipulation, disadvantageously, the manufacture cost of the remote controller is increased.

US 2004/0207766 discloses a depiction of a cylindrical key on a display screen of a remote control.

### SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides a broadcast receiver, a user input device and an item matching function as detailed in the appended claims.

A further aspect includes a broadcast receiver having an item matching function which displays state of favorite channels set to faces of a polyhedral key using a polyhedral menu by displaying the polyhedral key of a remote controller in a screen to enable a user to check the setting state of the favorite channels, a user input device, and an item matching method.

According to an aspect, a broadcast receiver includes a manipulation receiver which receives a user command from a remote controller comprising a polyhedral key; and a controller which matches an item to each face of the polyhedral key according to the user command received through the manipulation receiver.

The item may be a favorite channel.

When there is a favorite channel matched to an upper face of the polyhedral key and the upper face of the polyhedral key is pressed less than a certain time, the controller may control to display a broadcast program of the matched favorite channel in a screen. When there is a favorite channel matched to an upper face of the polyhedral key and the upper face of the polyhedral key is pressed over a certain time, the controller may match a current channel displayed in a screen to the upper face of the polyhedral key and sets the channel as a favorite channel.

When there is no favorite channel matched to an upper face of the polyhedral key and the upper face of the polyhedral key is pressed, the controller may match a current channel displayed in a screen to the upper face of the polyhedral face and sets as a favorite channel.

The broadcast receiver may further include a user interface (UI) generator which generates a polyhedral menu corresponding to the shape of the polyhedral key.

The UI generator may generate the polyhedral menu to display a broadcast program of the favorite channel matched to each face of the polyhedral key in each face of the polyhedral menu.

The UI generator may generate the polyhedral menu to display an identification (ID) given to each face of the polyhedral key in each face of the polyhedral menu.

The UI generator may generate the polyhedral menu to rotate and display the polyhedral menu according to a rotation of the polyhedral key.

The controller may match the favorite channels to the faces of the polyhedral key according to the user command received through the manipulation receiver while displaying the polyhedral menu in the screen.

The UI generator may generate a channel list to display the polyhedral menu together with the channel list required to match the favorite channels to the faces of the polyhedral key.

The item may correspond to one of a plurality of functions of the broadcast receiver.

According to an aspect, a user input device includes a polyhedral key formed in a polyhedral shape; and a controller which receives a user command through the polyhedral key.

A favorite channel may be matched to each face of the polyhedral key.

A brightness of the face of the polyhedral key may differ according to whether the favorite channel is matched or not.

The polyhedral key may be installed to rotate in at least one of a vertical direction and a horizontal direction.

An identification (ID) may be given to each face of the polyhedral key.

At least one of key values of the user input device may be matched to each face of the polyhedral key.

According to an aspect, an item matching method includes receiving a user command from a remote controller which comprises a polyhedral key; and matching an item to each face of the polyhedral key according to the user command.

The item may be a favorite channel.

When there is a favorite channel matched to an upper face of the polyhedral key and the upper face of the polyhedral key is pressed less than a certain time, the matching operation may control to display a broadcast program of the matched favorite channel in a screen. When there is a favorite channel matched to an upper face of the polyhedral key and the upper face of the polyhedral key is pressed over a certain time, the matching operation may match a current channel displayed in a screen to the upper face of the polyhedral key and sets the channel as a favorite channel. When there is no favorite channel matched to an upper face of the polyhedral key and the upper face of the polyhedral key is pressed, the matching operation may match a current channel displayed in a screen to the upper face of the polyhedral face and sets as a favorite channel.

The item matching method may further include generating a polyhedral menu corresponding to the shape of the polyhedral key and displaying a broadcast program of the favorite channel matched to each face of the polyhedral key

The display operation may additionally display an identification (ID) given to each face of the polyhedral key in each face of the polyhedral menu.

According to an aspect, an item matching method includes receiving a user command input through a polyhedral key; and matching an item to each face of the polyhedral key according to the user command.

A brightness of each face of the polyhedral key differs according to whether the favorite channel may be matched or not.

The polyhedral key may be installed to rotate in at least one of a vertical direction and a horizontal direction.

An ID may be given to each face of the polyhedral key.

### BRIEF DESCRIPTION OF THE DRAWINGS

The above and/or other aspects of the present invention will be more apparent by describing certain exemplary embodiments of the present invention with reference to the accompanying drawings, in which:

FIG. 1 depicts a user input device according to an exemplary embodiment of the present invention;

FIGS. 2A and 2B depict an operation of the user input device of FIG. 1;

FIG. 3 is a block diagram of a broadcast receiver according to an exemplary embodiment of the present invention;

FIGS. 4A and 4B depict a screen displayed in the broadcast receiver according to an exemplary embodiment of the present invention;

FIG. 5A depicts an operation of a user input device according to another exemplary embodiment of the present invention;

FIG. 5B depicts a screen displayed in a broadcast receiver according to another exemplary embodiment of the present invention;

FIG. 6A depicts an operation of a user input device according to yet another exemplary embodiment of the present invention;

FIG. 6B depicts a screen displayed in a broadcast receiver according to yet another exemplary embodiment of the present invention;

FIG. 7 is a flowchart of a favorite channel setting method of the broadcast receiver and the user input device according to an exemplary embodiment of the present invention;

FIG. 8 is a flowchart of a favorite channel editing method of the broadcast receiver and the user input device according to an exemplary embodiment of the present invention;

FIG. 9 is a simplified block diagram of a broadcast receiver according to still another exemplary embodiment of the present invention;

FIG. 10 is a simplified block diagram of a user input device according to still another exemplary embodiment of the present invention;

FIG. 11 is a flowchart of an item setting method of the broadcast receiver according to still another exemplary embodiment of the present invention; and

FIG. 12 is a flowchart of an item setting method of the user input device according to still another exemplary embodiment of the present invention.

### DETAILED DESCRIPTION OF THE INVENTION

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the exemplary embodiments of the present invention can be carried out without those specifically defined matters. Also, well-known functions or constructions are not described in detail since they would obscure the invention with unnecessary detail.

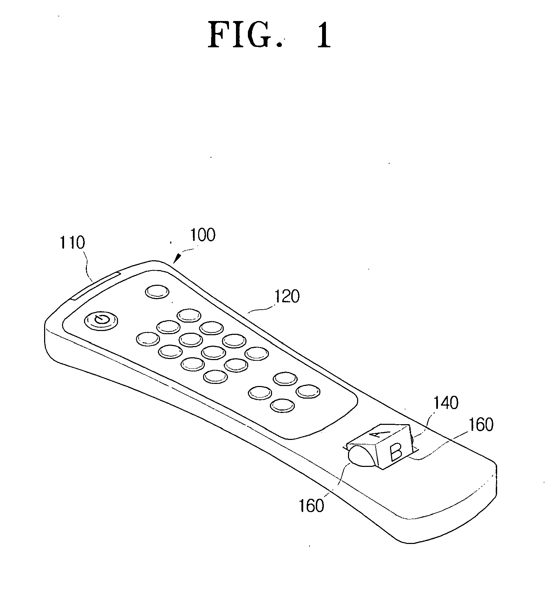

FIG. 1 depicts a user input device according to an exemplary embodiment of the present invention.

A remote controller 100 of FIG. 1, which is the user input device of the present invention, includes a transmitter 110, a function key part 120, a polyhedral key 140, a rotation supporter 160, and a controller (not shown).

The transmitter 110 sends a user command input through the function key part 120 and the polyhedral key 140 to an external device as an infrared signal under the control of the controller.

The function key part 120 includes various keys such as number keys, channel up and down keys, and volume up and down keys.

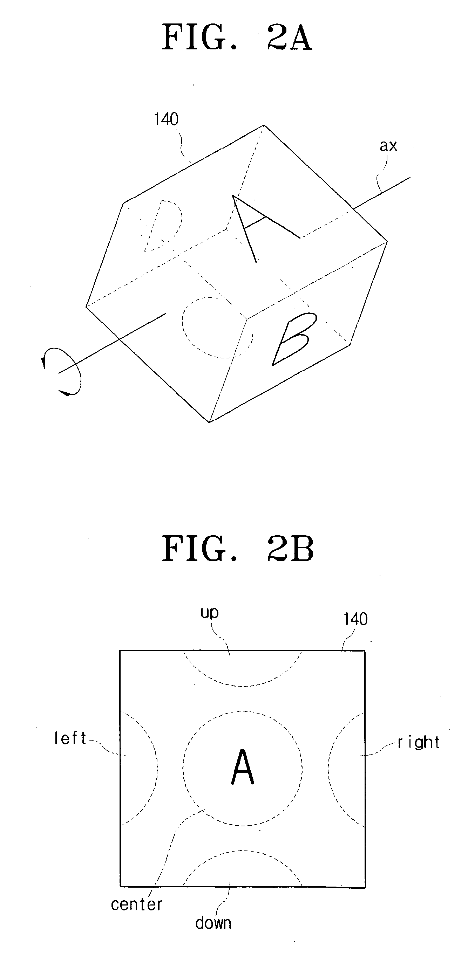

The polyhedral key 140 is rotatable in opposite directions because the rotation supporter 160 is installed on the left and the right of the polyhedral key 140. Favorite channels are matched to faces of the polyhedral key 140. Herein, the polyhedral key 140 may be rotatable from face to face according to the position of the rotation supporter 160. The operation of the polyhedral key 140 will be described in more detail by referring to FIGS. 2A and 2B.

The controller receives the user command input through the function key part 120 or the polyhedral key 140 and controls the transmitter 110 to send an infrared signal corresponding to the user command.

FIGS. 2A and 2B depict the operation of the polyhedral key 140 of the remote controller 100 of FIG. 1.

Referring to FIG. 2A, the polyhedral key 140 is installed to the remote controller 100 to vertically rotate based on a rotation axis (ax). A unique identification (ID) such as A, B, C and D is allocated to each face of the polyhedral key 140, excluding the face of the rotation axis. When a favorite channel is matched to the upper face (the face A in FIG. 2A), the ID A of the upper face is displayed brightly. When a favorite channel is not matched, the ID A of the upper face is displayed darkly. The bright or dark display of the ID A is feasible by providing a light source such as light emitting diode (LED) in the polyhedral key 140 and turning on and off the light source depending on the matching. This applies to cases where the polyhedral key 140 rotates and other face (the face B, C or D) becomes the upper face.

FIG. 2B is a plane view of the polyhedral key 140, which is taken in front of the remote controller 100. Four sides of the upper face (the face A in FIG. 2B) can act as channel up and down keys and volume up and down keys. When Up and Down of the face A are pressed, the same operations as pressing the channel up and down keys are executed. When Left and Right of the face A are pressed, the same operations as pressing the volume up and down keys are executed. When Center of the face A is pressed, the setup function or the select function is executed.

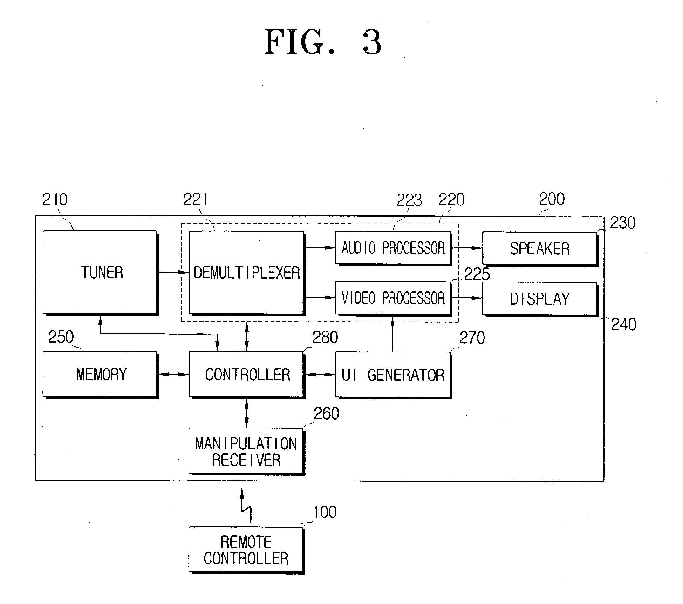

FIG. 3 is a block diagram of a broadcast receiver according to an exemplary embodiment of the present invention.

The broadcast receiver 200 includes a tuner 210, a signal processor 220, a speaker 230, a display 240, a memory 250, a manipulation receiver 260, a user interface (UI) generator 270, and a controller 280.

The tuner 210 tunes a broadcast signal having a frequency band corresponding to a control signal of the controller 280, among broadcast signals received from a broadcast station, demodulates the tuned broadcast signal, and corrects error of the signal.

The signal processor 220 includes a demultiplexer 221, a video processor 225, and an audio processor 223.

The demultiplexer 221 splits the broadcast signal demodulated at the tuner 210 to video data, audio data, and extra data.

The video processor 225 decodes the video data split at the demultiplexer 221 and processes the decoded video data to have a vertical frequency, a resolution, and an aspect ratio in accordance with an output specification of the display 240.

The audio processor 223 decodes the audio data split at the demultiplexer 221, applies a sound quality enhancement algorithm, and outputs the processed to the speaker 230. The speaker 230 produces the audio data fed from the audio processor 223 as a sound.

The display 240 displays the video data processed at the video processor 225 in a screen. The display 240 can employ various display modules such as a digital light processing (DLP) projector, an LCD panel, and a plasma display panel (PDP).

The memory 250 contains various programs required to execute the operations of the broadcast receiver 220, and stores a setup state of the broadcast receiver 200 such as a setting state of the favorite channel. For example, the memory 250 stores the favorite channels matched to the faces of the polyhedral key 140 of the remote controller 100 as shown below in Table 1.

**[Table 1]**

| ID of polyhedral key | Favorite channel |
|---|---|
| A | 11 |
| B | 7 |
| C | 5 |
| D | - |

In Table 1, channel number 11 is set as the favorite channel in the face A of the polyhedral key 140, channel number 7 is set as the favorite channel in the face B, channel number 5 is set as the favorite channel in the face C, and no favorite channel is set in the face D.

The manipulation receiver 260 includes keys (not shown) for inputting the user command and a receiver (not shown) for receiving a user command from the remote controller 100. The manipulation receiver 260 forwards a key signal corresponding to the received user command to the controller 280. That is, the manipulation receiver 260 enables to edit the favorite channel by providing the key signal corresponding to the user command input through the polyhedral key 140 of the remote controller 100 to the controller 280.

The UI generator 270 generates a menu for displaying the state of the broadcast receiver 200 in the display 240. In detail, the UI generator 270 generates a polyhedral menu corresponding to the shape of the polyhedral key 140 of the remote controller 100. Herein, the UI generator 270 generates the polyhedral menu to display a broadcast program of the channels set as the favorite channels of the faces of the polyhedral key 140 according to the setting of the favorite channels stored to the memory 250.

The UI generator 270 displays the rotated polyhedral menu in the screen according to the rotation of the polyhedral key 140. The UI generator 270 displays the IDs of the polyhedral key 140 in the faces of the polyhedral menu and displays the polyhedral menu together with a channel list required to edit the favorite channel so that the user can edit the favorite channel with the UI and the polyhedral menu displayed in the screen.

When the user command is input through the manipulation receiver 260, the controller 280 controls the components to perform the corresponding function. The controller 280 can be implemented using a microcomputer and a central processing unit (CPU). The controller 280 matches the favorite channels to the faces of the polyhedral key 140 and stores the setting of the favorite channels to the memory 250 according to the manipulation of the polyhedral key 140.

In further detail, when a favorite channel is matched to the upper face of the polyhedral key 140 and the upper face of the polyhedral key 140 is pressed less than a certain amount of time, the controller 280 controls to display the broadcast program of the matched favorite channel in the screen. When a favorite channel is matched to the upper face of the polyhedral key 140 and the upper face of the polyhedral key 140 is pressed more than the certain amount of time, the controller 280 matches the current channel displayed in the screen to the upper face of the polyhedral key 140 and set it as the favorite channel. When no favorite channel is matched to the upper face of the polyhedral key 140 and the user presses the upper face of the polyhedral key 140, the controller 280 matches the current channel displayed in the screen to the upper face of the polyhedral key 140 and sets it as the favorite channel.

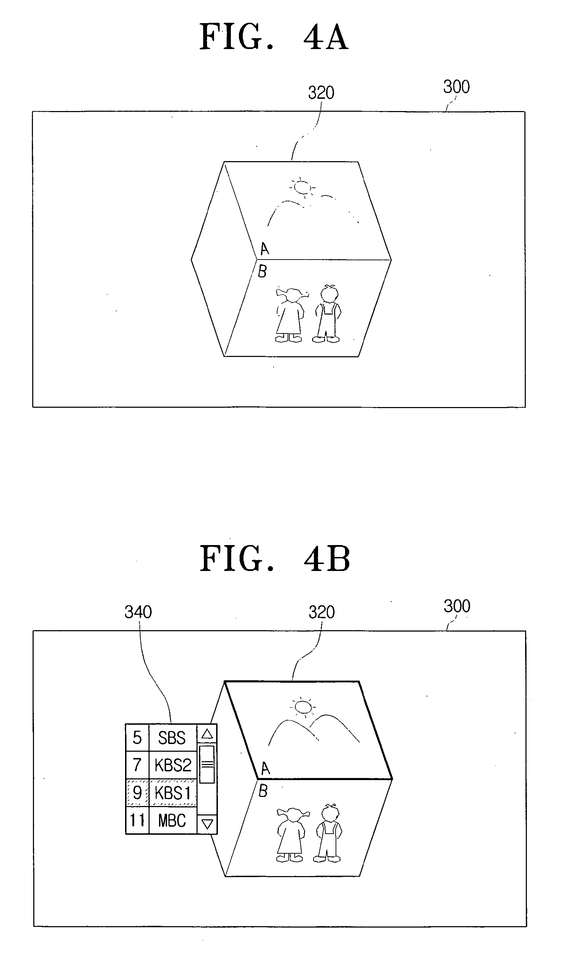

FIGS. 4A and 4B depict a screen displayed in the broadcast receiver according to an exemplary embodiment of the present invention.

As shown in FIG. 4A, the screen 300 of the broadcast receiver 200 displays the polyhedral menu 320 in the same shape as the polyhedral key 140 of the remote controller 100. Each face of the polyhedral menu 320 displays the broadcast program of the favorite channel matched to each face of the polyhedral key 140. The same IDs A, B, C and D as the IDs of the faces of the polyhedral key 140 are provided on the faces of the polyhedral menu 320. The polyhedral menu 320 can be displayed in the screen 300 when the user executes the UI by manipulating the menu key of the function key part 120 of the remote controller 100. Next, when the user vertically rotates the polyhedral key 140, the polyhedral menu 320 displayed in the screen 30 also rotates according to the rotation of the polyhedral key 140.

In FIG. 4B, the screen 300 of the broadcast receiver 200 displays the polyhedral menu 320 together with a channel list menu 340. When the user moves the face of the polyhedral key 140 to edit to the top and presses the center of the upper face while the polyhedral menu 320 is displayed in the screen, the upper face of the polyhedral menu 320 is activated to be editable and the channel list menu 340 is displayed in the screen 300. The user selects his/her intended channel by scrolling the channel list menu 340 by pressing Up and Down or Left and Right of the upper face of FIG. 2B, and then matches a new channel to the upper face as the favorite channel by pressing the center of the upper face. That is, in FIG. 4B, the channel number 9 is matched to the face A as the favorite channel and then stored.

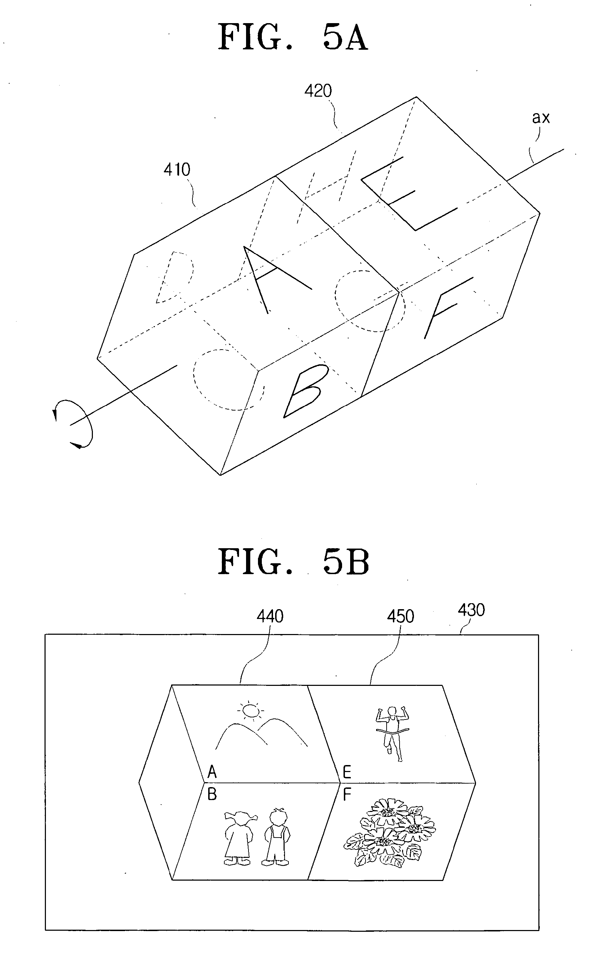

FIG. 5A depicts an operation of a user input device according to another exemplary embodiment of the present invention.

A remote controller (not shown) which is the user input device according to another exemplary embodiment of the present invention, includes a first polyhedral key 410 and a second polyhedral key 420 as shown in FIG. 5A. While two polyhedral keys are illustrated in FIG. 5A, more than two polyhedral keys can be provided. The operation of the first polyhedral key 410 and the second polyhedral key 420 is the same as the operation of the polyhedral key 140 of FIGS. 2A and 2B, and the first polyhedral key 410 and the second polyhedral key 420 independently operate.

FIG. 5B depicts a screen displayed in the broadcast receiver according to another exemplary embodiment of the present invention.

The screen 430 of FIG. 5B displays a first polyhedral menu 440 and a second polyhedral menu 450 corresponding to the first polyhedral key 410 and the second polyhedral key 420 of FIG. 5A. The operation of the first polyhedral key 440 and the second polyhedral menu 450 is the same as that of the polyhedral menu 320 of FIGS. 4A and 4B. The first polyhedral menu 440 can be edited through the manipulation of the first polyhedral key 410, and the second polyhedral menu 450 can be edited through the manipulation of the second polyhedral key 420.

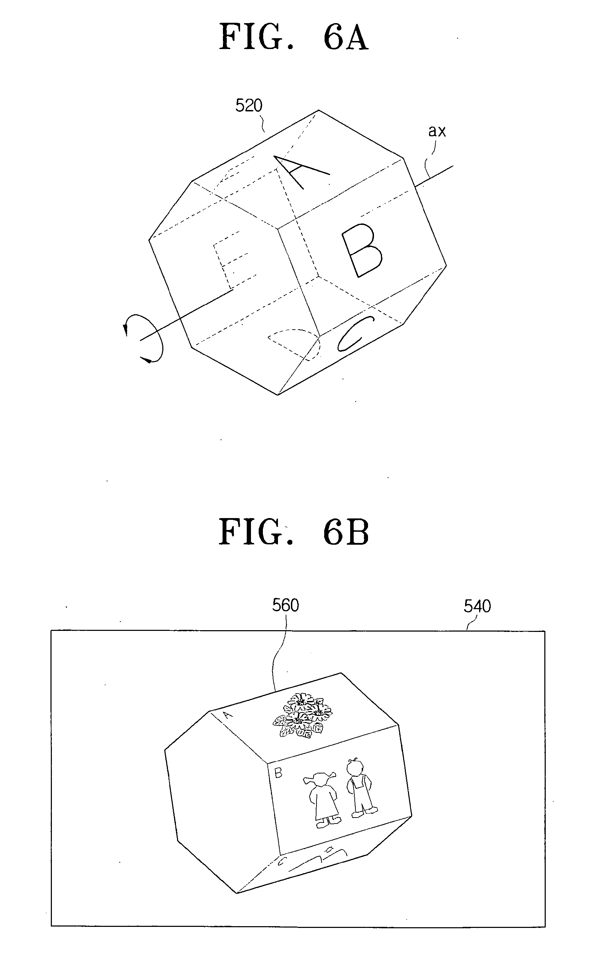

FIG. 6A depicts an operation of a user input device according to yet another exemplary embodiment of the present invention.

A remote controller (not shown), which is the user input device according to yet another exemplary embodiment of the present invention, includes a polyhedral key 520 as shown in FIG. 6A. In the polyhedral key 520, a face of the rotation axis (ax) is a regular hexahedron. Since there are six faces, six favorite channels can be matched. While the face of the rotation axis is regular hexahedral in FIG. 6A, it's shape may be other polygon. The operation of the polyhedral key 520 of FIG. 6A is the same as the operation of the polyhedral key 140 of FIGS. 2A and 2B.

Specifically, the polyhedral key 520 of FIG. 6A is also rotatable vertically, and the faces display their IDs A, B, C, D, E, and F. When a favorite channel is matched to an upper face (the face A in FIG. 6A), the ID A of the upper face is displayed brightly. When no favorite channel is matched, the ID A of the upper face is displayed darkly. The bright or dark display of the ID A is feasible by providing a light source such as LED in the polyhedral key 520 and turning on and off the light source according to the matching. This applies to a case where the other face (the face B, C, D, E or F) is positioned at the top.

Four sides of the upper face (the face A in FIG. 6A) can act as the channel up and down keys, the volume up and down keys, the setup key, and the select key as described in FIG. 2B.

FIG. 6B depicts a screen displayed in the broadcast receiver according to yet another exemplary embodiment of the present invention.

The screen 540 of the broadcast receiver 200 displays a polyhedral menu 560 in the same shape as the polyhedral key 520 of the remote controller 100 as shown in FIG. 6B. Each face of the polyhedral menu 560 displays a broadcast program of the favorite channel matched to the face of the polyhedral key 520. The same IDs as the IDs provided on the faces of the polyhedral key 520 are given. The polyhedral menu 560 can be displayed when the user executes the UI by manipulating the menu key of the function key part 120 of the remote controller 100. When the user rotates the polyhedral key 520 up and down, the polyhedral menu 560 displayed in the screen 540 also rotates according to the rotation of the polyhedral key 520.

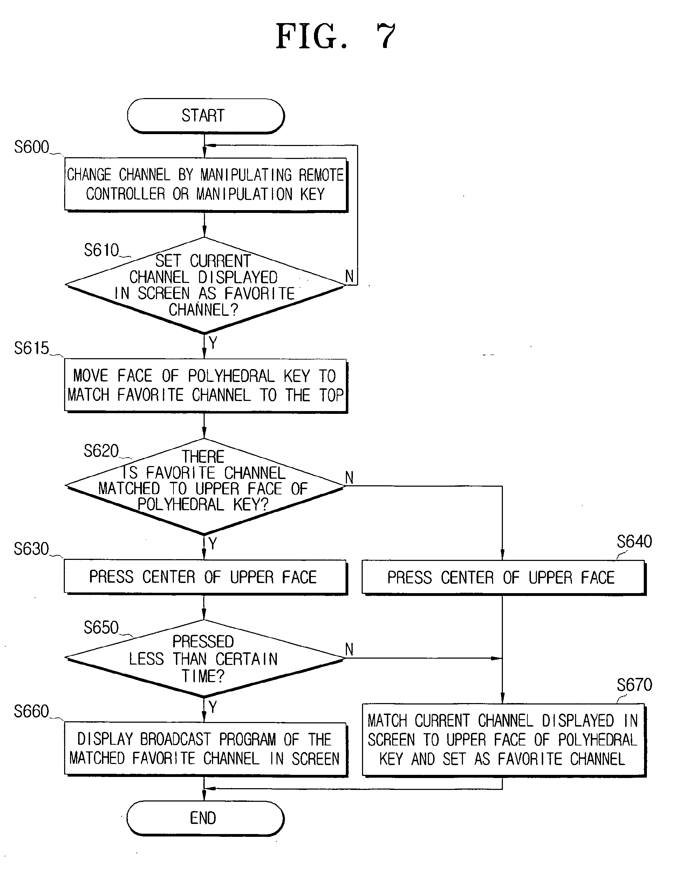

FIG. 7 is a flowchart of a favorite channel setting method of the broadcast receiver and the user input device according to an exemplary embodiment of the present invention.

In FIG. 7, after changing the channel by manipulating the manipulation key (S600), when the user wants to set a current channel displayed in the screen as the favorite channel (S610-Y), the user moves the face of the polyhedral key 140, 410, 420 and 520 to match the favorite channel to the top (S615). Next, the user determines whether there is a favorite channel matched to the upper face of the polyhedral key 140, 410, 420 and 520 (S620).

When there exists the favorite channel matched to the upper face of the polyhedral key 140, 410, 420 and 520 (S620-Y), the user presses the center of the upper face (S630). In doing so, when the center is pressed less than a certain amount of time (S650), the broadcast program of the matched favorite channel is displayed in the screen (S660). In particular, when the center of the upper face of the polyhedral key 140, 410, 420 and 520 is pressed less than a certain amount of time, the controller 280 determines it as the select signal and displays the broadcast program of the favorite channel matched to the upper face in the screen.

On the other hand, when the center is pressed more than the certain amount of time (S650-N), the current channel displayed in the screen is matched to the upper face of the polyhedral key 140, 410, 420 and 520 and set as the favorite channel (S670). In particular, when the center of the upper face of the polyhedral key 140, 410, 420, and 520 is pressed more than the certain amount of time, the controller 280 determines it as the setting signal and defines the new channel in the upper face as the favorite channel.

On the other hand, when there is no favorite channel matched to the upper face of the polyhedral key 140, 410, 420 and 520 (S620-N), upon pressing the center of the upper face (S640), the current channel displayed in the screen is matched to the upper face of the polyhedral key 140, 410, 420 and 520 and defined as the favorite channel (S670). In other words, when there is no favorite channel matched to the upper face of the polyhedral key 140, 410, 420 and 520, the current channel displayed in the screen is matched to the upper face of the polyhedral key 140, 410, 420 and 520 as its favorite channel regardless of the amount of time of the center of the upper face is pressed.

Hence, the favorite channel can be matched to each face of the polyhedral key 140, 410, 420 and 520.

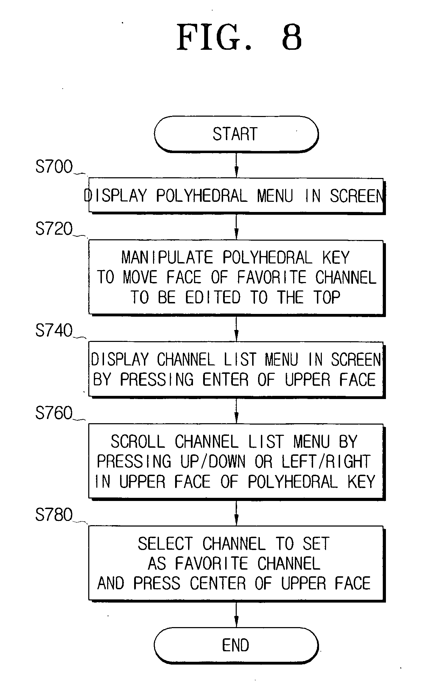

FIG. 8 is a flowchart of a favorite channel editing method of the broadcast receiver and the user input device according to an exemplary embodiment of the present invention.

In FIG. 8, the user displays the polyhedral menu 320, 440, 450 and 560 in the screen by manipulating the function key part 120 (S700), and manipulates the polyhedral key 140, 410, 420, and 520 to move the face of the favorite channel to be edited to the top (S720). The user displays the channel list menu 340 in the screen by pressing the center of the upper face of the polyhedral key 140, 410, 420 and 520 (S740) and scrolls the channel list menu 340 by pressing the upper side and the lower side or the left side and the right side of the upper face of the polyhedral key 140, 410, 420 and 520 (S760). Next, the user selects a channel to be set as the favorite channel and then presses the center of the upper face (S780).

Thus, the favorite channel is edited.

While the favorite channel is edited by way of example, various items other than the favorite channels can be applied to the polyhedral key and the polyhedral menu.

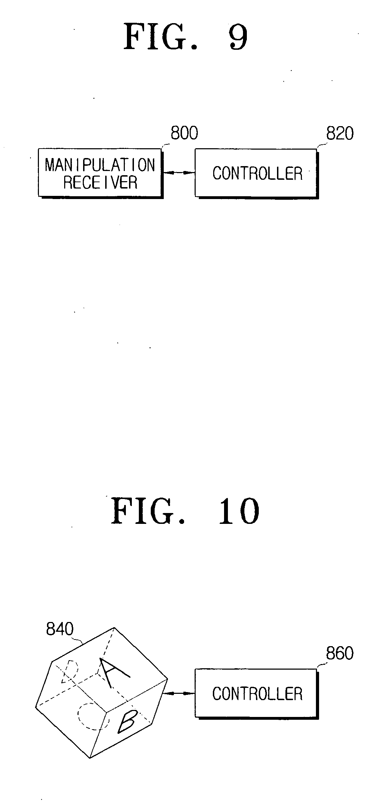

FIG. 9 is a simplified block diagram of a broadcast receiver according to still another exemplary embodiment of the present invention.

The broadcast receiver of FIG. 9 includes a manipulation receiver 800 and a controller 820.

The manipulation receiver 800 receives a user command from a remote controller (not shown) which receives the user command and provides a key signal corresponding to the received user command to the controller 820. The remote controller includes a polyhedral key. The shape and the operation of the polyhedral key have been illustrated in FIGS. 2A, 2B, 5A and 6A.

When the user command is input through the manipulation receiver 800, the controller 820 controls the components to perform the corresponding function. The controller 820 can be implemented using a microcomputer and a CPU. According to the manipulation of the polyhedral key of the remote controller, the controller 820 matches various items corresponding to the functions of the broadcast receiver to the faces of the polyhedral key.

In more detail, when there is an item matched to the upper face of the polyhedral key and the upper face of the polyhedral key is pressed less than a certain amount of time, the controller 820 controls to execute the function corresponding to the matched item. When there is an item matched to the upper face of the polyhedral key and the upper face of the polyhedral key is pressed more than the certain amount of time, the controller 820 matches the current function to the upper face of the polyhedral key. When no item is matched to the upper face of the polyhedral key and the upper face of the polyhedral key is pressed, the controller 820 matches the current function to the upper face of the polyhedral key.

FIG. 10 is a simplified block diagram of a user input device according to still another exemplary embodiment of the present invention.

The user input device of FIG. 10 includes a polyhedral key 840 and a controller 860.

The polyhedral key 840 is installed to vertically or horizontally rotate based on a rotation axis (not shown). Four faces, excluding the face of the rotation axis, are given unique IDs A, B, C and D. Various items corresponding to the functions of the user input device or the functions of the external device which receives the user command through the user input device are matched to the four faces of the polyhedral key 840. In this exemplary embodiment of the present invention, while the shape of the polyhedral key 840 is hexahedral for example, the polyhedral key 840 can be shaped as shown in FIGS. 5A and 6A.

The controller 860 receives the user command through the polyhedral key 840 and sets the functions of the user input device, or controls a transmitter (not shown) to send an infrared signal corresponding to the user command input through the user input device to the external device. In other words, the controller 860 controls to match the items to the faces of the polyhedral key 840 according to the user command input through the polyhedral key 840. Part of key values given to the user input device such as remote controller is matched to each face of the polyhedral key 840.

When the item is matched to the upper face (the face A in FIG. 10) of the polyhedral key 840, the controller 860 controls to brightly display the ID A of the upper face. When no item is matched, the controller 860 controls to darkly display the ID A of the upper face. The bright or dark display of the ID A is carried out by providing a light source such as LED in the polyhedral key 840 and turning on and off the light source according to the item matching. The controller 860 performs the same control operation when the polyhedral key 840 rotates and the other face (the face B, C or D) is positioned at the top.

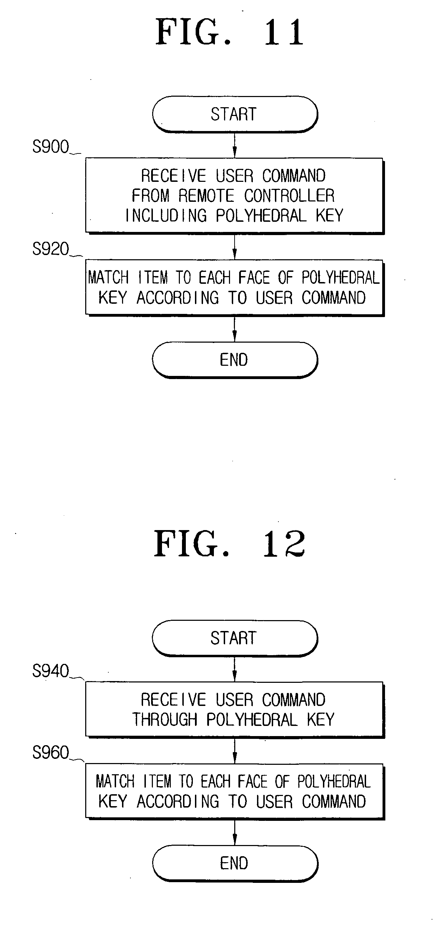

FIG. 11 is a flowchart of an item setting method of the broadcast receiver according to still another exemplary embodiment of the present invention.

In FIG. 11, the controller 820 receives the user command from the remote controller having the polyhedral key (S900). The controller 820 matches the items to the faces of the polyhedral key according to the received user command (S920). In further detail, when the item is matched to the upper face of the polyhedral key and the upper face of the polyhedral key is pressed less than a certain time, the controller 820 controls to execute the function corresponding to the matched item. When the item is matched to the upper face of the polyhedral key and the upper face of the polyhedral key is pressed over the certain time, the controller 820 matches the current function to the upper face of the polyhedral key. When no item is matched to the upper face of the polyhedral key and the user presses the upper face of the polyhedral key, the controller 820 matches the current function to the upper face of the polyhedral key.

FIG. 12 is a flowchart of an item setting method of the user input device according to still another exemplary embodiment of the present invention.

In FIG. 12, the controller 860 receives the user command through the polyhedral key 840 (S940). The controller 860 controls to match the items to the polyhedral key 840 according to the input user command (S860).

As such, it is possible to various items corresponding to the functions of the electronic device such as broadcast receiver or user input device, to the polyhedral key.

In the light of the foregoing as set forth above, the favorite channels are matched to the respective faces of the polyhedral key of the remote controller to thus facilitate the setting and the editing of the favorite channels. Not only the favorite channels but also various items are matched to the faces of the polyhedral key so that the user can easily manipulate and use the various items.

Further, the polyhedral menu corresponding to the polyhedral key is displayed to thus allow to confirm and to edit the items matched to the faces.

The foregoing exemplary embodiments and advantages are merely exemplary and are only limited by the scope of the appended claims.

Attention is directed to all papers and documents which are filed concurrently with or previous to this specification in connection with this application and which are open to public inspection with this specification.

## Claims

1. A broadcast receiver (200) comprising:
a remote controller (100) comprising a rotatable polyhedral hardware key (140) formed in a polyhedral shape; and
a manipulation receiver (260) which receives a command from said remote controller (100); and
a controller (280) which matches a channel or operating function of the broadcast receiver to a uniquely identifiable face of the polyhedral hardware key (140) according to the command received by the manipulation receiver (260).

2. The broadcast receiver of claim 1, wherein, if a channel is matched to an upper face of the polyhedral hardware key (140) and the upper face of the polyhedral hardware key (140) is pressed less than a certain amount of time, the controller (280) controls to display a broadcast program of the matched channel in a screen.

3. The broadcast receiver of claim 1 or claim 2, wherein, if a channel is matched to an upper face of the polyhedral hardware key (140) and the upper face of the polyhedral hardware key (140) is pressed more than a certain amount of time, the controller (280) matches a current channel displayed in a screen to the upper face of the polyhedral key (140) and sets the channel as a favorite channel.

4. The broadcast receiver of any one of claims 1 to 3, wherein, if no channel is matched to an upper face of the polyhedral hardware key (140) and the upper face of the polyhedral hardware key (140) is pressed, the controller (280) matches a current channel displayed in a screen to the upper face of the polyhedral face and sets the current channel as a favorite channel.

5. The broadcast receiver of any preceding claim, further comprising:
a user interface (UI) generator (270) which is operable to generate a polyhedral menu corresponding to a shape of the polyhedral hardware key (140) for display on a display (240) of the broadcast receiver.

6. The broadcast receiver of claim 5, wherein the UI generator (270) generates the polyhedral menu to display a broadcast program of a channel matched to each face of the polyhedral hardware key (140) in each face of the polyhedral menu.

7. The broadcast receiver of claim 5 or claim 6, wherein the UI generator (270) generates the polyhedral menu to display an identification (ID) given to each face of the polyhedral hardware key (140) in each face of the polyhedral menu.

8. The broadcast receiver of any one of claims 5 to 7, wherein the UI generator (270) generates the polyhedral menu to rotate and display the polyhedral menu according to a rotation of the polyhedral hardware key (140).

9. The broadcast receiver of any one of claims 5 to 8, wherein the controller (280) matches channels to the faces of the polyhedral hardware key (140) according to the command received by the manipulation receiver (260) while displaying the polyhedral menu in a screen.

10. The broadcast receiver of claim 9, wherein the UI generator (270) generates a channel list to display the polyhedral menu together with the channel list required to match the channels to the faces of the polyhedral hardware key (140).

11. A user input device (100) comprising:
a rotatable polyhedral hardware key (140) formed in a polyhedral shape; and
a controller which is operable to receive a command input matched to a uniquely identifiable face of said rotatable polyhedral hardware key (140) by manipulation of the polyhedral hardware key (140), the input device (100) being operable to input said command to a broadcast receiver (200) as claimed in one of claims 1 to 10,
whereby the broadcast receiver (200) is configured to match a channel or operating function of the broadcast receiver (200) to said uniquely identifiable face of the polyhedral hardware key (140) according to said command.

12. The user input device of claim 11, wherein a channel is matched to each face of the polyhedral hardware key (140).

13. The user input device of claim 12, wherein a brightness of the face of the polyhedral hardware key (140) differs according to whether the channel is matched.

14. The user input device of any one of claims 11 to 13, wherein an identification (ID) is given to each face of the polyhedral hardware key (140).

15. An item matching method comprising:
receiving a user command from a remote controller (100) which comprises a rotatable polyhedral hardware key (140); and further **characterized by**
matching a channel or operating function of a broadcast receiver controlled by the remote controller (100) to a uniquely identifiable face of the polyhedral hardware key (140) according to the user command.

16. The item matching method of claim 15, wherein, if a channel is matched to an upper face of the polyhedral hardware key (140) and the upper face of the polyhedral hardware key (140) is pressed less than a certain amount of time, the matching controls to display a broadcast program of the matched channel in a screen.

17. The item matching method of claim 15 or claim 16, wherein, if a channel is matched to an upper face of the polyhedral hardware key (140) and the upper face of the polyhedral hardware key (140) is pressed more than a certain amount of time, the matching matches a current channel displayed in a screen to the upper face of the polyhedral key (140) and sets the current channel as a favorite channel.

18. The item matching method of any one of claims 15 to 17, wherein, if no favorite channel is matched to an upper face of the polyhedral hardware key (140) and the upper face of the polyhedral hardware key (140) is pressed, the matching matches a current channel displayed in a screen to the upper face of the polyhedral face and sets the current channel as a favorite channel.

19. The item matching method of any one of claims 15 to 18, further comprising:
generating a polyhedral menu corresponding to a shape of the polyhedral hardware key (140) and displaying a broadcast program of the channel matched to each face of the polyhedral key (140).

20. The item matching method of claim 19, wherein the displaying additionally displays an identification (ID) given to each face of the polyhedral hardware key (140) in each face of the polyhedral menu.

21. The item matching method of any one of claims 15 to 20, wherein a brightness of each face of the polyhedral hardware key (140) differs according to whether the channel is matched.

## Patentansprüche

1. Rundfunkempfänger (200), umfassend:
eine Fernbedienung (100), die eine drehbare polyedrische Hardwaretaste (140) umfasst, die in einer polyedrischen Form gebildet ist; und
einen Manipulationsempfänger (260), der einen Befehl von der Fernbedienung (100) empfängt; und
eine Steuerung (280), die einen Kanal oder eine Betriebsfunktion des Rundfunkempfängers gemäß dem durch den Manipulationsempfänger (260) empfangenen Befehl an eine eindeutig identifizierbare Fläche der polyedrischen Hardwaretaste (140) anpasst.

2. Rundfunkempfänger nach Anspruch 1, wobei, wenn ein Kanal an eine obere Fläche der polyedrischen Hardwaretaste (140) angepasst ist und die obere Fläche der polyedrischen Hardwaretaste (140) kürzer als eine bestimmte Zeitdauer gedrückt wird, die Steuerung (280) steuert, ein Rundfunkprogramm des angepassten Kanals in einem Bildschirm anzuzeigen.

3. Rundfunkempfänger nach Anspruch 1 oder Anspruch 2, wobei, wenn ein Kanal an eine obere Fläche der polyedrischen Hardwaretaste (140) angepasst ist und die obere Fläche der polyedrischen Hardwaretaste (140) länger als eine bestimmte Zeitdauer gedrückt wird, die Steuerung (280) einen in einem Bildschirm angezeigten derzeitigen Kanal an die obere Fläche der polyedrischen Taste (140) anpasst und den Kanal als einen Favoritenkanal setzt.

4. Rundfunkempfänger nach einem der Ansprüche 1 bis 3, wobei, wenn kein Kanal an eine obere Fläche der polyedrischen Hardwaretaste (140) angepasst ist und die obere Fläche der polyedrischen Hardwaretaste (140) gedrückt wird, die Steuerung (280) einen in einem Bildschirm angezeigten derzeitigen Kanal an die obere Fläche der polyedrischen Fläche anpasst und den derzeitigen Kanal als einen Favoritenkanal setzt.

5. Rundfunkempfänger nach einem der vorhergehenden Ansprüche, ferner umfassend:
einen Generator (270) einer Benutzeroberfläche (UI), der betreibbar ist, um ein polyedrisches Menü zu erzeugen, das einer Form der polyedrischen Hardwaretaste (140) zur Anzeige auf einem Display (240) des Rundfunkempfängers entspricht.

6. Rundfunkempfänger nach Anspruch 5, wobei der UI-Generator (270) das polyedrische Menü erzeugt, um ein Rundfunkprogramm eines Kanals anzuzeigen, der an jede Fläche der polyedrischen Hardwaretaste (140) in jeder Fläche des polyedrischen Menüs angepasst ist.

7. Rundfunkempfänger nach Anspruch 5 oder 6, wobei der UI-Generator (270) das polyedrische Menü erzeugt, um eine jeder Fläche der polyedrischen Hardwaretaste (140) gegebene Identifikation (ID) in jeder Fläche des polyedrischen Menüs anzuzeigen.

8. Rundfunkempfänger nach einem der Ansprüche 5 bis 7, wobei der UI-Generator (270) das polyedrische Menü erzeugt, um das polyedrische Menü gemäß einer Drehung der polyedrischen Hardwaretaste (140) zu drehen und anzuzeigen.

9. Rundfunkempfänger nach einem der Ansprüche 5 bis 8, wobei die Steuerung (280) gemäß dem durch den Manipulationsempfänger (260) empfangenen Befehl Kanäle an die Flächen der polyedrischen Hardwaretaste (140) anpasst, während das polyedrische Menü in einem Bildschirm angezeigt wird.

10. Rundfunkempfänger nach Anspruch 9, wobei der UI-Generator (270) eine Kanalliste erzeugt, um das polyedrische Menü zusammen mit der Kanalliste anzuzeigen, die erforderlich ist, um die Kanäle an die Flächen der polyedrischen Hardwaretaste (140) anzupassen.

11. Benutzereingabeeinrichtung (100), umfassend:
eine drehbare polyedrische Hardwaretaste (140), die in einer polyedrischen Form gebildet ist; und
eine Steuerung, die betreibbar ist, um eine Befehlseingabe zu empfangen, die durch Manipulation der polyedrischen Hardwaretaste (140) an eine eindeutig identifizierbare Fläche der drehbaren polyedrischen Hardwaretaste (140) angepasst wird, wobei die Eingabeeinrichtung (100) betreibbar ist, um den Befehl in einen Rundfunkempfänger (200) nach einem der Ansprüche 1 bis 10 einzugeben,
wobei der Rundfunkempfänger (200) dafür ausgelegt ist, einen Kanal oder eine Betriebsfunktion des Rundfunkempfängers (200) gemäß dem Befehl an die eindeutig identifizierbare Fläche der polyedrischen Hardwaretaste (140) anzupassen.

12. Benutzereingabeeinrichtung nach Anspruch 11, wobei an jede Fläche der polyedrischen Hardwaretaste (140) ein Kanal angepasst wird.

13. Benutzereingabeeinrichtung nach Anspruch 12, wobei eine Helligkeit der Fläche der polyedrischen Hardwaretaste (140) abhängig davon, ob der Kanal angepasst ist, unterschiedlich ist.

14. Benutzereingabeeinrichtung nach einem der Ansprüche 11 bis 13, wobei jeder Fläche der polyedrischen Hardwaretaste (140) eine Identifikation (ID) gegeben wird.

15. Postenanpassungsverfahren mit den folgenden Schritten:
Empfangen eines Benutzerbefehls von einer Fernbedienung (100), die eine drehbare polyedrische Hardwaretaste (140) umfasst; und ferner **gekennzeichnet durch**
Anpassen eines Kanals oder einer Betriebsfunktion eines **durch** die Fernbedienung (100) gesteuerten Rundfunkempfängers an eine eindeutig identifizierbare Fläche der polyedrischen Hardwaretaste (140) gemäß dem Benutzerbefehl.

16. Postenanpassungsverfahren nach Anspruch 15, wobei, wenn ein Kanal an eine obere Fläche der polyedrischen Hardwaretaste (140) angepasst ist und die obere Fläche der polyedrischen Hardwaretaste (140) kürzer als eine bestimmte Zeitdauer gedrückt wird, die Anpassung steuert, ein Rundfunkprogramm des angepassten Kanals in einem Bildschirm anzuzeigen.

17. Postenanpassungsverfahren nach Anspruch 15 oder Anspruch 16, wobei, wenn ein Kanal an eine obere Fläche der polyedrischen Hardwaretaste (140) angepasst ist und die obere Fläche der polyedrischen Hardwaretaste (140) länger als eine bestimmte Zeitdauer gedrückt wird, die Anpassung einen in einem Bildschirm angezeigten derzeitigen Kanal an die obere Fläche der polyedrischen Taste (140) anpasst und den derzeitigen Kanal als einen Favoritenkanal setzt.

18. Postenanpassungsverfahren nach einem der Ansprüche 15 bis 17, wobei, wenn kein Favoritenkanal an eine obere Fläche der polyedrischen Hardwaretaste (140) angepasst ist und die obere Fläche der polyedrischen Hardwaretaste (140) gedrückt wird, die Anpassung einen in einem Bildschirm angezeigten derzeitigen Kanal an die obere Fläche der polyedrischen Fläche anpasst und den derzeitigen Kanal als einen Favoritenkanal setzt.

19. Postenanpassungsverfahren nach einem der Ansprüche 15 bis 18, ferner mit den folgenden Schritten:
Erzeugen eines polyedrischen Menüs, das einer Form der polyedrischen Hardwaretaste (140) entspricht, und Anzeigen eines Rundfunkprogramms des an jede Fläche der polyedrischen Taste (140) angepassten Kanals.

20. Postenanpassungsverfahren nach Anspruch 19, wobei das Anzeigen zusätzlich eine jeder Fläche der polyedrischen Hardwaretaste (140) gegebene Identifikation (ID) in jeder Fläche des polyedrischen Menüs anzeigt.

21. Postenanpassungsverfahren nach einem der Ansprüche 15 bis 20, wobei eine Helligkeit jeder Fläche der polyedrischen Hardwaretaste (140) abhängig davon, ob der Kanal angepasst ist, unterschiedlich ist.

## Revendications

1. Récepteur de diffusion (200) comprenant :
une unité de télécommande (100) comprenant une clé matérielle polyédrique tournante (140) présentant une forme polyédrique ; et
un récepteur de manipulation (260) qui reçoit une commande de ladite unité de télécommande(100) ; et
une unité de commande (280) qui fait correspondre un chaîne ou une fonction d'exploitation du récepteur de diffusion à une face identifiable de manière unique de la clé matérielle polyédrique (140) conformément à la commande reçue par le récepteur de manipulation (260).

2. Récepteur de diffusion selon la revendication 1, dans lequel, si une correspondance est trouvée entre une chaîne et une face supérieure de la clé matérielle polyédrique (140) et si une pression est exercée sur la face supérieure de la clé matérielle polyédrique (140) pendant moins d'un certain temps, l'unité de commande (280) commande l'affichage d'un programme diffusé sur la chaîne trouvée sur un écran.

3. Récepteur de diffusion selon la revendication 1 ou la revendication 2, dans lequel, si une correspondance est trouvée entre une chaîne et une face supérieure de la clé matérielle polyédrique (140) et si une pression est exercée sur la face supérieure de la clé matérielle polyédrique (140) pendant plus d'un certain temps, l'unité de commande (280) fait correspondre une chaîne courante affichée sur un écran à la face supérieure de la clé polyédrique (140) et définit la chaîne comme étant une chaîne favorite.

4. Récepteur de diffusion selon l'une quelconque des revendications 1 à 3, dans lequel, si aucune correspondance n'est trouvée entre une chaîne et une face supérieure de la clé matérielle polyédrique (140) et si une pression est exercée sur la face supérieure de la clé matérielle polyédrique (140), l'unité de commande (280) fait correspondre une chaîne courante affichée sur un écran avec la face supérieure de la clé polyédrique et définit la chaîne courante comme étant une chaîne favorite.

5. Récepteur de diffusion selon l'une quelconque des revendications précédentes, comprenant en outre :
un générateur d'interface utilisateur (UI) (270) qui a pour fonction de générer un menu polyédrique correspondant à une forme de la clé matérielle polyédrique (140) pour l'afficher sur un dispositif d'affichage (240) du récepteur de diffusion.

6. Récepteur de diffusion selon la revendication 5, dans lequel le générateur d'UI (270) génère le menu polyédrique pour afficher un programme de diffusion d'une chaîne ayant une correspondance avec chaque face de la clé matérielle polyédrique (140) sur chaque face du menu polyédrique.

7. Récepteur de diffusion selon la revendication 5 ou la revendication 6, dans lequel le générateur d'UI (270) génère le menu polyédrique pour afficher une identification (ID) affectée à chaque face de la clé polyédrique matérielle (140) sur chaque face du menu polyédrique.

8. Récepteur de diffusion selon l'une quelconque des revendications 5 à 7, dans lequel le générateur d'UI (270) génère le menu polyédrique de manière à faire tourner et à afficher le menu polyédrique conformément à une rotation de la clé matérielle polyédrique (140).

9. Récepteur de diffusion selon l'une quelconque des revendications 5 à 8, dans lequel l'unité de commande (280) fait correspondre des chaînes aux faces de la clé matérielle polyédrique (140) conformément à la commande reçue par le récepteur de manipulation (260) tout en affichant le menu polyédrique sur un écran.

10. Récepteur de diffusion selon la revendication 9, dans lequel le générateur d'UI (270) génère une liste de chaînes de manière à afficher le menu polyédrique en même temps que la liste de chaînes requise pour faire correspondre les chaînes aux faces de la clé matérielle polyédrique (140).

11. Dispositif d'entrée d'utilisateur (100) comprenant :
une clé matérielle polyédrique tournante (140) présentant une forme polyédrique ; et
une unité de commande qui a pour fonction de recevoir une entrée de commande mise en correspondance avec une face identifiable de manière unique de ladite clé matérielle polyédrique tournante (140) par manipulation de la clé matérielle polyédrique (140), le dispositif d'entrée (100) ayant pour fonction de fournir en entrée ladite commande à un récepteur de diffusion (200) selon l'une des revendications 1 à 10,
le récepteur de diffusion (200) étant configuré pour faire correspondre une chaîne ou une fonction d'exploitation du récepteur de diffusion (200) à ladite face identifiable de manière unique de la clé matérielle polyédrique (140) conformément à ladite commande.

12. Dispositif d'entrée d'utilisateur selon la revendication de 11, dans lequel une chaîne est mise en correspondance avec chaque face de la clé matérielle polyédrique (140).

13. Dispositif d'entrée d'utilisateur selon la revendication 12, dans lequel une luminosité de la face de la clé matérielle polyédrique (140) diffère selon que la chaîne a ou non été trouvée.

14. Dispositif d'entrée d'utilisateur selon l'une quelconque des revendications 11 à 13, dans lequel une identification (ID) est affectée à chaque face de la clé matérielle polyédrique (140).

15. Procédé de mise en correspondance d'éléments consistant à :
recevoir une commande d'un utilisateur depuis une unité de télécommande (100) qui comprend une clé matérielle polyédrique tournante (140) ; et **caractérisée en outre par** le faite de :
faire correspondre une chaîne ou une fonction d'exploitation d'un récepteur de diffusion commandé par l'unité de télécommande (100) à une face identifiable de manière unique de la clé matérielle polyédrique (140) conformément à la commande de l'utilisateur.

16. Procédé de mise en correspondance d'éléments selon la revendication 15, dans lequel, si une chaîne est mise en correspondance avec une face supérieure de la clé matérielle polyédrique (140) et si une pression est exercée sur la face supérieure de la clé matérielle polyédrique pendant moins d'un certain temps, la mise en correspondance commande l'affichage d'un programme de diffusion de la chaîne mise en correspondance sur un écran.

17. Procédé de mise en correspondance d'éléments selon la revendication 15 ou la revendication 16, dans lequel, si une chaîne est mise en correspondance avec une face supérieure de la clé matérielle polyédrique (140) et si une pression est exercée sur la face supérieure de la clé matérielle polyédrique (140) pendant plus d'un certain temps, la mise en correspondance fait correspondre une chaîne courante affichée sur un écran à une face supérieure de la clé polyédrique (140) et définit la chaîne courante comme étant une chaîne favorite.

18. Procédé de mise en correspondance d'éléments selon l'une quelconque des revendications 15 à 17, dans lequel, si aucune chaîne favorite n'est mise en correspondance avec une face supérieure de la clé matérielle polyédrique (140) et si une pression est exercée sur la face supérieure de la clé matérielle polyédrique (140), la mise en correspondance fait correspondre une chaîne courante affichée sur un écran à la face supérieure de la clé polyédrique et définit la chaîne courante comme étant une chaîne favorite.

19. Procédé de mise en correspondance d'éléments selon l'une quelconque des revendications 15 à 18, consistant en outre à :
générer un menu polyédrique correspondant à une forme de la clé matérielle polyédrique (140) et afficher un programme de diffusion de la chaîne mise en correspondance avec chaque face de la clé polyédrique (140).

20. Procédé de mise en correspondance d'éléments selon la revendication 19, dans lequel l'affichage affiche en outre une identification (ID) affectée à chaque face de la clé matérielle polyédrique (140) sur chaque face du menu polyédrique.

21. Procédé de mise en correspondance d'éléments selon une quelconque des revendications 15 à 20, dans lequel une luminosité de chaque face de la clé matérielle polyédrique (140) diffère selon que la chaîne a ou non été trouvée.
